# EUROPÄISCHE PATENTSCHRIFT

(11) **EP 1 353 210 B1**
(45) Veröffentlichungstag und Bekanntmachung des Hinweises auf die Patenterteilung: **26.09.2007**
(21) Anmeldenummer: 03100352.8
(22) Anmeldetag: 17.02.2003
(51) Int. Cl.: G02B 21/06, G02B 5/04

(54) **Mikroskop mit einer Vorrichtung zur Ermittlung der Lichtleistung eines Beleuchtungslichtstrahls**
Microscope including a device to determine the light intensity of an illumination beam
Microscope à dispositif pour déterminer l'intensité de la lumière d'un faisceau d'illumination

(30) Priorität: 30.03.2002 DE 20205081 U
(43) Veröffentlichungstag der Anmeldung: 15.10.2003
(73) Patentinhaber: Leica Microsystems CMS GmbH, 35578 Wetzlar (DE)
(72) Erfinder: Hay, William, 64646, Heppenheim (DE)
(74) Vertreter: Reichert, Werner Franz

(56) Entgegenhaltungen:
- EP-A- 1 184 701
- DE-A- 4 128 264

## Beschreibung

Die Erfindung betrifft ein Mikroskop mit einer Lichtquelle, die einen Beleuchtungslichtstrahl zur Beleuchtung einer Probe emittiert, mit einer Vorrichtung zur Ermittlung der Lichtleistung des Beleuchtungslichtstrahls, wobei ein Strahlteiler Messlicht aus dem Beleuchtungslichtstrahl abspaltet.

Zur Messung der Leistung eines Lichtstrahles ist es allgemein üblich, einen Messstrahl aus dem Lichtstrahl mit einem Strahlteiler abzuteilen und mit Hilfe eines Detektors, der ein zur Leistung des Messstrahles proportionales elektrisches Signal erzeugt, zunächst die Leistung des Messstrahles zu ermitteln, um anschließend bei Kenntnis des Teilungsverhältnisses des Strahlteilers auf die Leistung des Lichtstrahles zu schließen.

In der Scanmikroskopie wird eine Probe mit einem Beleuchtungslichtstrahl beleuchtet, um das von der Probe emittierte Detektionslicht, als Reflexions- oder Fluoreszenzlicht, zu beobachten. Der Beleuchtungslichtstrahl kann Licht mehrerer Wellenlängen beinhalten, um beispielsweise mehrere Farbstoffe gleichzeitig anzuregen. Der Fokus eines Beleuchtungslichtstrahles wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet. Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahles zu einem dreidimensionalen Bild führt. Meist wird ein dreidimensionales Bild durch schichtweise Bilddatennahme erzielt. Kommerzielle Scanmikroskope bestehen meist aus einem Scanmodul, dass an das Stativ eines klassischen Lichtmikroskops angeflanscht wird, wobei das Scanmodul alle genannten zur Abrasterung einer Probe zusätzlich nötigen Elemente beinhaltet.

Eine bekannte Methode, Schwankungen und Fluktuationen der Beleuchtungslichtleistung auszugleichen bzw. zu korrigieren, beruht darauf, mit Hilfe eines Strahlteilers von dem Beleuchtungslichtstrahl einen Messstrahl abzuteilen und zur Bilderzeugung oder zur Bildberechnung das Verhältnis der gemessenen Leistungen von Messstrahl und Detektionslichtstrahl zu verwenden. Diese Vorgehensweise ist beispielsweise in der Veröffentlichung G.J. Brakenhoff, Journal of Microscopy, Vol. 117, Pt 2, November 1979, S. 233-242 offenbart.

Aus der Offenlegungsschrift DE 197 02 753 A1 ist eine Anordnung zur Überwachung der in einen Scankopf eingekoppelten Laserstrahlung, mittels eines Detektionselementes, auf das ein Teil der eingekoppelten Strahlung über einen Strahlteiler gelenkt wird, bekannt. Diese Anordnung kann mit auswechselbaren Filtern ausgerüstet sein, um eine wellenlängenabhängige Überwachung der Laserstrahlung zu ermöglichen. Die Anordnung hat den Nachteil, dass ohne Filterrad nur die Gesamtleistung des Beleuchtungslichtstrahles, der sich bei vielen Anwendungen aus Licht mehrerer Wellenlängen zusammensetzt, überwacht werden kann. Wird beispielsweise das Licht zweier unterschiedlicher Laser zu einem Beleuchtungslichtstrahl vereinigt, so kann eine eventuell auftretende Leistungsschwankung eines Lasers zwar registriert werden, jedoch ist diese nicht korrigierbar oder kompensierbar, da eine Zuordnung nicht möglich ist. Der Einsatz der Filter löst dieses Problem, jedoch mit großem, insbesondere zeitlichem, Aufwand für den Benutzer des Mikroskops. Darüber hinaus birgt das Austauschen der Filter durch den Benutzer die Gefahr von ungewollten Dejustierungen und anderen äußere Störungen, insbesondere Vibrationen und thermische Einflüsse, die die Reproduzierbarkeit und Genauigkeit der Messung begrenzen.

Eine weitere Anordnung zur Überwachung der in ein Mikroskop eingekoppelten Lichtleistung ist aus der Offenlegungsschrift EP 1 184 701 A1 bekannt.

Der Erfindung liegt daher die Aufgabe zugrunde ein Mikroskop vorzuschlagen, das eine effiziente, zuverlässige und genaue Ermittlung und Überwachung der Lichtleistung des Beleuchtungslichtstrahles auch bei Mehrfarbanwendungen ermöglicht.

Obige Aufgabe wird durch ein Mikroskop nach Anspruch 1 gelöst.

Die Erfindung hat den Vorteil, dass eine zuverlässige und schnelle (online) Messung und Überwachung der Leistung aller spektraler Anteile des Beleuchtungslichtstrahles ermöglicht ist und somit gleichzeitig die Vorraussetzungen geschaffen sind, auch bei Mehrfarbanwendungen Schwankungen der Beleuchtungslichtleistung des Beleuchtungslichtstrahles oder Schwankungen von Anteilen des Beleuchtungslichtstrahles, beispielsweise in einem Regelkreis, zu kompensieren.

Die Vorrichtung umfasst zur simultanen farbselektiven Detektion ein räumlich spektral aufspaltendes Element, das als Prisma ausgeführt ist. Es kann beispielsweise auch als Gitter, insbesondere als Transmissionsgitter, ausgeführt sein. In einer ganz besonders bevorzugten Ausführung bildet eine, vorzugsweise beschichtete, Fläche des Prismas den Strahlteiler. Es kann sich bei der Beschichtung beispielsweise um eine Teilverspiegelung handeln.

Einen weiteren Nachteil, den die aus dem Stand der Technik bekannte Anordnung aufweist, nämlich, dass es an einem planparallelen Strahlteilersubstrat aufgrund der geringen Dicke zu Interferenzeffekten, hervorgerufen durch Mehrfachreflektionen, kommt, die zu starken Intensitätsschwankungen auf dem Detektor führen, ist bei der erfindungsgemäßen Vorrichtung ebenfalls beseitigt. Da es bei einem Prisma keine parallelen Flächen gibt, können Mehrfachreflexionen hier nicht zu Interferenzerscheinungen auf dem Detektor führen.

Zur Vermeidung von Reflexen, die nach mehrmaligem Umlenken innerhalb der Prismas schließlich auf den Detektor treffen und dort das Signal verfälschen, können einzelne Flächen des Prismas aufgeraut sein.

Die Vorrichtung umfasst zur simultanen farbselektiven Detektion mindestens einem Detektor, der das Messlicht empfängt. Der Detektor besteht in einer ganz besonders bevorzugten Ausführung aus mehreren Einzeldetektoren, die jeweils spektral unterschiedliche Anteile des Messlichts empfangen. Der Detektor kann beispielsweise eine Photodiode oder einen Photomultiplier oder eine Photodiodenzeile oder ein Photodiodenarray oder ein CCD-Element oder ein Photomultiplierarray oder eine Photomultiplierzeile beinhalten. Die Einzeldetektoren sind vorzugsweise einzeln jeweils für die Wellenlänge kalibriert, die sie empfangen.

In einer anderen bevorzugten Ausführung ist der Detektor unmittelbar an der Vorrichtung zur simultanen farbselektiven Detektion angeordnet. Vorzugsweise ist das Eintrittsfenster des Detektors direkt auf die Austrittsfläche des Prismas gekittet. Dies verhindert störende Interferenzeffekte durch Mehrfachreflexionen zwischen Prisma und Detektor.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
Fig. 1 eine erfindungsgemäße Vorrichtung zur Ermittlung der Lichtleistung eines Beleuchtungslichtstrahls,
Fig. 2 eine weitere erfindungsgemäße Vorrichtung zur Ermittlung der Lichtleistung eines Beleuchtungslichtstrahls,
Fig. 3 eine weitere erfindungsgemäße Vorrichtung zur Ermittlung der Lichtleistung eines Beleuchtungslichtstrahles,
Fig. 4 eine weitere erfindungsgemäße Vorrichtung zur Ermittlung der Lichtleistung eines Beleuchtungslichtstrahles,
Fig. 5 ein erfindungsgemäßes Mikroskop.

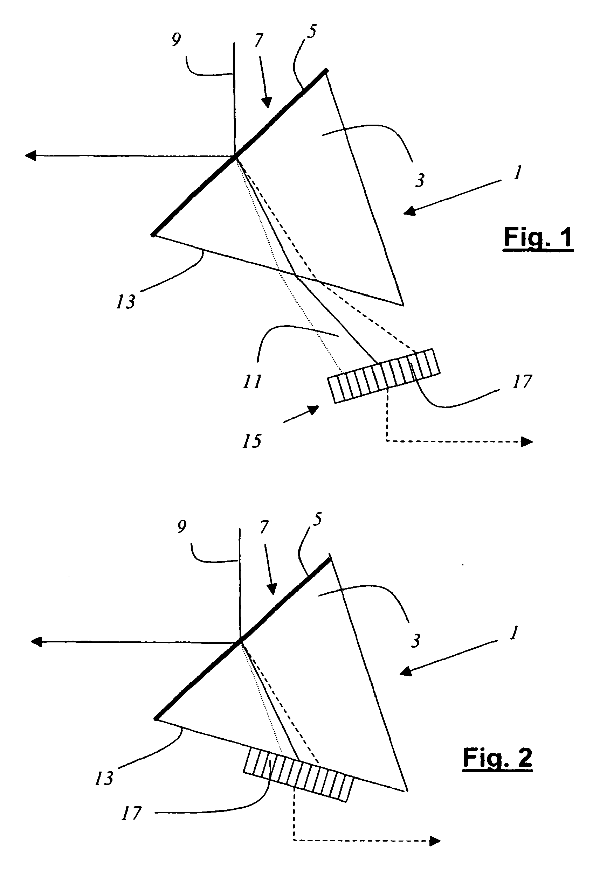

Fig. 1 zeigt eine erfindungsgemäße Vorrichtung zur Ermittlung der Lichtleistung eines Beleuchtungslichtstrahls. Die Vorrichtung umfasst ein räumlich spektral aufspaltendes Element 1, das als Prisma 3 ausgeführt ist. Eine erste Fläche des Prismas ist mit einer teilreflektierenden Beschichtung 5 versehen und bildet einen Strahlteiler 7. Auf den Strahlteiler 7 trifft der Beleuchtungslichtstrahl 9. An der Beschichtung 5 wird 5% des Beleuchtungslichtstrahles als Messlicht 11 abgespalten, das durch das Prisma 3 räumlich spektral aufgefächert wird und das das Prisma 3 durch eine Austrittsfläche 13 verlässt. Anschließend trifft das Messlicht auf einen Detektor 15, der als Photodiodenzeile 17 ausgeführt ist. In den Einzeldetektoren der Photodiodenzeile werden zur Lichtleistung des jeweiligen spektralen Anteils in der Stromstärke proportionale elektrische Signale erzeugt.

Fig. 2 zeigt eine weitere erfindungsgemäße Vorrichtung zur Ermittlung der Lichtleistung eines Beleuchtungslichtstrahls. Bei dieser Ausführung ist der Detektor unmittelbar an die Austrittsfläche des Prismas gekittet.

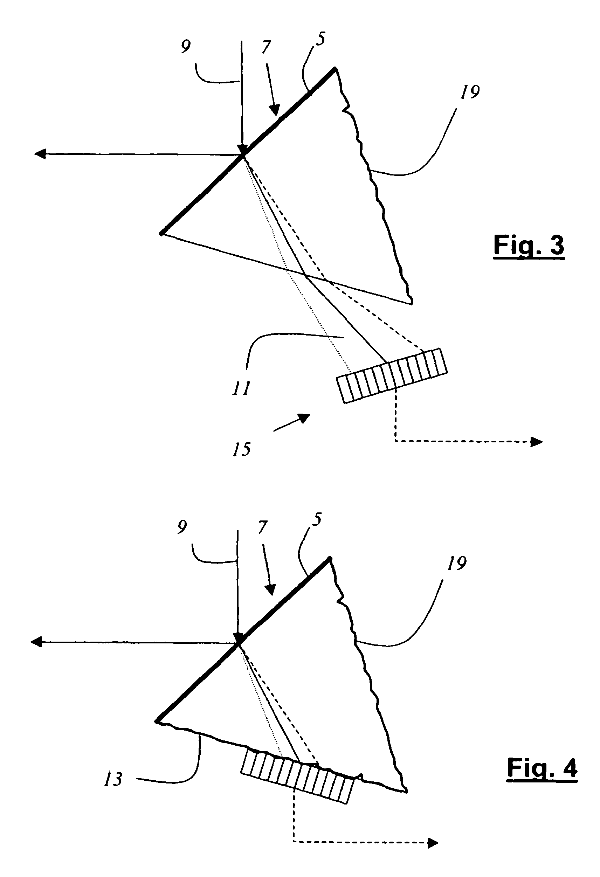

Fig. 3 zeigt eine weitere erfindungsgemäße Vorrichtung zur Ermittlung der Lichtleistung eines Beleuchtungslichtstrahls. Bei dieser Ausführung ist zur Unterdrückung von ungewollten Reflexionen eine dritte Fläche 19 des Prismas 3 aufgeraut.

Fig. 4 zeigt eine weitere erfindungsgemäße Vorrichtung zur Ermittlung der Lichtleistung eines Beleuchtungslichtstrahls, die weitgehend der in Fig. 2 gezeigten Ausführung entspricht. Bei dieser Ausführung sind zur Unterdrückung von ungewollten Reflexionen eine dritte Fläche 19 des Prismas 3 und die Austrittsfläche 13 aufgeraut.

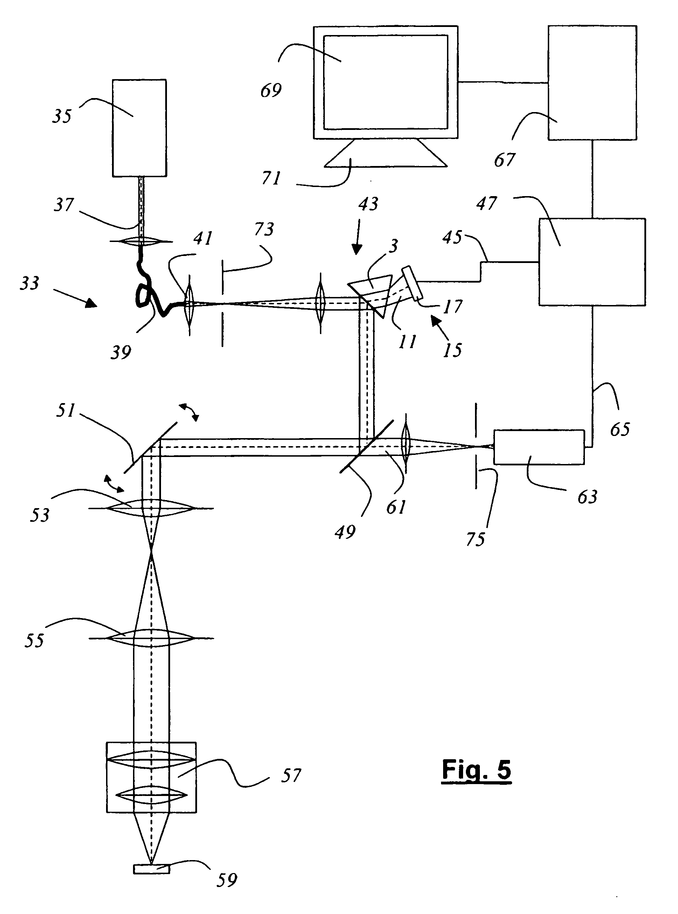

Fig. 5 zeigt schematisch ein erfindungsgemäßes Mikroskop 33, das als konfokales Scanmikroskop ausgeführt ist. Der von einem Beleuchtungssystem 35 kommende Beleuchtungslichtstrahl 37 wird über eine Glasfaser 39 transportiert und trifft nach der Auskopplung aus der Glasfaser 39 mit Hilfe der Optik 41 auf eine Vorrichtung 43 zur Ermittlung der Leistung des Beleuchtungslichtstrahles 37, die weitgehend der in Fig. 1 gezeigten Vorrichtung mit einem Prisma 3 und einer Photodiodenzeile 17 entspricht. Der Detektor 15 erzeugt zur Leistung der jeweiligen spektralen Anteile des Messlichts 11 proportionale elektrische Signale, die über die Leitung 45 an die Verarbeitungseinheit 47 geleitet werden. Über einen Strahlteiler 49 gelangt der Beleuchtungslichtstrahl 37 zum kardanisch aufgehängten Scanspiegel 51, der den Strahl durch die Scanoptik 53, die Tubusoptik 55 und das Objektiv 57 hindurch über bzw. durch die Probe 59 führt. Der Beleuchtungslichtstrahl 37 wird bei nicht transparenten Proben 59 über die Probenoberfläche geführt. Bei biologischen Proben 59 (Präparaten) oder transparenten Proben kann der Beleuchtungslichtstrahl 37 auch durch die Probe 59 geführt werden. Dies bedeutet, dass verschiedene Fokusebenen des Objekts nacheinander durch den Beleuchtungslichtstrahl 37 abgetastet werden. Die nachträgliche Zusammensetzung ergibt dann ein dreidimensionales Bild der Probe. Das von der Probe 59 ausgehende Detektionslicht 61 gelangt durch das Objektiv 57, die Tubusoptik 55 und die Scanoptik 53 hindurch und über den Scanspiegel 51 zum Strahlteiler 49, passiert diesen und trifft auf eine Detektorvorrichtung 63, die als Multibanddetektor ausgeführt ist. In der Detektorvorrichtung 63, die als Multibanddetektor ausgeführt ist, werden spektral selektiv, zur Leistung des Detektionslichts proportionale elektrische Detektionssignale erzeugt und über die Leitung 65 an die Verarbeitungseinheit 47 weitergegeben. In der Verarbeitungseinheit 47 werden die eingehenden Analogsignale zunächst digitalisiert und dann digital miteinander verrechnet und korrigierte Detektionslichtleistungen ermittelt. Diese werden an einen PC 67 weitergegeben. Die korrigierten Detektionslichtleistungen werden anhand eines Positionssignals des kardanisch aufgehängten Spiegels der Position des zugehörigen Rasterpunktes zugeordnet und die Daten aller Rasterpunkte werden zu einem Abbild der Probe 69 zusammengesetzt, das auf einem Display 71 dargestellt ist. Das bei einem konfokalen Scanmikroskop üblicherweise vorgesehene Beleuchtungspinhole 73 und das Detektionspinhole 75 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: räumlich spektral aufspaltendes Element
- 3: Prisma
- 5: Beschichtung
- 7: Strahlteiler
- 9: Beleuchtungslichtstrahl
- 11: Messlicht
- 13: Austrittsfläche
- 15: Detektor
- 17: Photodiodenzeile
- 19: Fläche
- 33: Mikroskop
- 35: Beleuchtungssystem
- 37: Beleuchtungslichtstrahl
- 39: Glasfaser
- 41: Optik
- 43: Vorrichtung
- 45: Leitung
- 47: Verarbeitungseinheit
- 49: Strahlteiler
- 51: Scanspiegel
- 53: Scanoptik
- 55: Tubusoptik
- 57: Objektiv
- 59: Probe
- 61: Detektionslicht
- 63: Detektorvorrichtung
- 65: Leitung
- 67: PC
- 69: Abbild der Probe
- 71: Display
- 73: Beleuchtungspinhole
- 75: Detektionspinhole

## Patentansprüche

1. Mikroskop mit einer Lichtquelle, die einen Beleuchtungslichtstrahl zur Beleuchtung einer Probe emittiert und mit einer Vorrichtung zur Ermittlung der Lichtleistung des Beleuchtungslichtstrahls, wobei ein Strahlteiler das zur Ermittlung der Lichtleistung verwendete Messlicht aus dem Beleuchtungslichtstrahl abspaltet und eine Vorrichtung zur simultanen farbselektiven Detektion des Messlichtes vorgesehen ist, die ein räumlich spektral aufspaltendes Element in Form eines Prismas und mindestens einen Detektor umfasst, der das räumlich spektral aufgespaltete Messlicht detektiert, **dadurch gekennzeichnet, dass** der Strahlteiler durch eine Fläche des Prismas ausgebildet ist.

2. Mikroskop nach Anspruch 1, **dadurch gekennzeichnet, dass** die Fläche des Prismas teilreflektierend beschichtet ist.

3. Mikroskop nach Anspruch 1, **dadurch gekennzeichnet, dass** mindestens eine Fläche des Prismas aufgeraut ist.

4. Mikroskop nach einem der Ansprüche 1-3, **dadurch gekennzeichnet, dass** der Detektor aus mehreren Einzeldetektoren besteht, die jeweils spektral unterschiedliche Anteile des Messlichts empfangen.

5. Mikroskop nach Anspruch 4, **dadurch gekennzeichnet, dass** der Detektor eine Photodiode oder einen Photomultiplier oder eine Photodiodenzeile oder ein Photodiodenarray oder ein CCD-Element oder ein Photomultiplierarray oder eine Photomultiplierzeile beinhaltet.

6. Mikroskop nach einem der Ansprüche 4 oder 5, **dadurch gekennzeichnet, dass** der Detektor unmittelbar an dem räumlich spektral aufspaltenden Element angeordnet ist.

## Claims

1. Microscope having a light source that emits an illuminating light beam for illumination of a specimen, and having an apparatus for determining the light power level of the illuminating light beam, a beam splitter separating the measuring light, used to determine the light power level, out of the illuminating light beam and an apparatus for simultaneous colour-selective detection of the measuring light being provided, which apparatus comprises a spatially spectrally dividing element in the form of a prism and at least one detector which detects the spatially spectrally divided measuring light, **characterized in that** the beam splitter is formed by a surface of the prism.

2. Microscope according to Claim 1, **characterized in that** the surface of the prism is coated in partially reflective fashion.

3. Microscope according to Claim 1, **characterized in that** at least one surface of the prism is roughened.

4. Microscope according to one of the Claims 1-3, **characterized in that** the detector consists of several individual detectors that each receive spectrally different components of the measuring light.

5. Microscope according to Claim 4, **characterized in that** the detector contains a photodiode or a photomultiplier or a photodiode row or a photodiode array or a CCD element or a photomultiplier array or a photomultiplier row.

6. Microscope according to either of claim 4 or 5, **characterized in that** the detector is arranged directly on the spatially spectrally dividing element.

## Revendications

1. Microscope avec une source de lumière qui émet un rayon de lumière d'éclairage pour éclairer un échantillon, et avec un dispositif pour déterminer le rendement lumineux du rayon de lumière d'éclairage, dans lequel un séparateur de faisceau sépare la lumière de mesure utilisée pour déterminer le rendement lumineux du rayon de lumière d'éclairage et un dispositif pour une détection simultanée, sélective en couleur, de la lumière de mesure est prévu, le dispositif comprenant un élément à séparation spectrale dans l'espace sous la forme d'un prisme et au moins un détecteur qui détecte la lumière de mesure séparée de façon spectrale dans l'espace, **caractérisé en ce que** le séparateur de faisceau est réalisé par une surface du prisme.

2. Microscope selon la revendication 1, **caractérisé en ce que** la surface du prisme est recouverte de façon partiellement réfléchissante.

3. Microscope selon la revendication 1, **caractérisé en ce qu'**au moins une surface du prisme est rugueuse.

4. Microscope selon l'une quelconque des revendications 1 à 3, **caractérisé en ce que** le détecteur se compose de plusieurs détecteurs individuels qui reçoivent respectivement des parts spectralement différentes de la lumière de mesure.

5. Microscope selon revendication 4, **caractérisé en ce que** le détecteur comprend une photodiode ou un photomultiplicateur ou une rangée de photodiodes ou un réseau de photodiodes ou un élément CCD ou un réseau de photomultiplicateurs ou une rangée de photomultiplicateurs.

6. Microscope selon l'une quelconque des revendications précédentes 4 ou 5, **caractérisé en ce que** le détecteur est agencé directement au niveau de l'élément à séparation spectrale dans l'espace.
